**Europäisches Patentamt**

**European Patent Office**

**Office européen des brevets**

(19)

(11) Veröffentlichungsnummer: **0 027 833**
**A1**

# (12) EUROPÄISCHE PATENTANMELDUNG

(21) Anmeldenummer: **79104792.1**

(22) Anmeldetag: **30.11.79**

(51) Int. Cl.³: **H 04 M 1/72,** H 04 B 9/00

(30) Priorität: 30.10.79 DE 2943866
30.10.79 DE 2934867
31.10.79 DE 2944028

(43) Veröffentlichungstag der Anmeldung: **06.05.81**
**Patentblatt 81/18**

(84) Benannte Vertragsstaaten: **AT BE CH FR GB IT LU NL SE**

(71) Anmelder: **SIEMENS AKTIENGESELLSCHAFT,
Postfach 22 02 61, D-8000 München 22 (DE)**

(72) Erfinder: **Christiansen, Hans Martin, Dipl.-Ing.,
Minorstasse 12a, D-8000 München 71 (DE)**
Erfinder: **Trimmel, Herwig, Dipl.-Ing., Adenauerstrasse 9,
D-8031 Puchheim (DE)**
Erfinder: **Kunde, Gerhard, Dipl.-Ing.,
Blutenburgstrasse 102, D-8000 München 19 (DE)**
Erfinder: **Schön, Siegfried, Tulpenweg 10,
D-8013 Starnberg (DE)**

(54) **Fernsprech-Teilnehmerstation.**

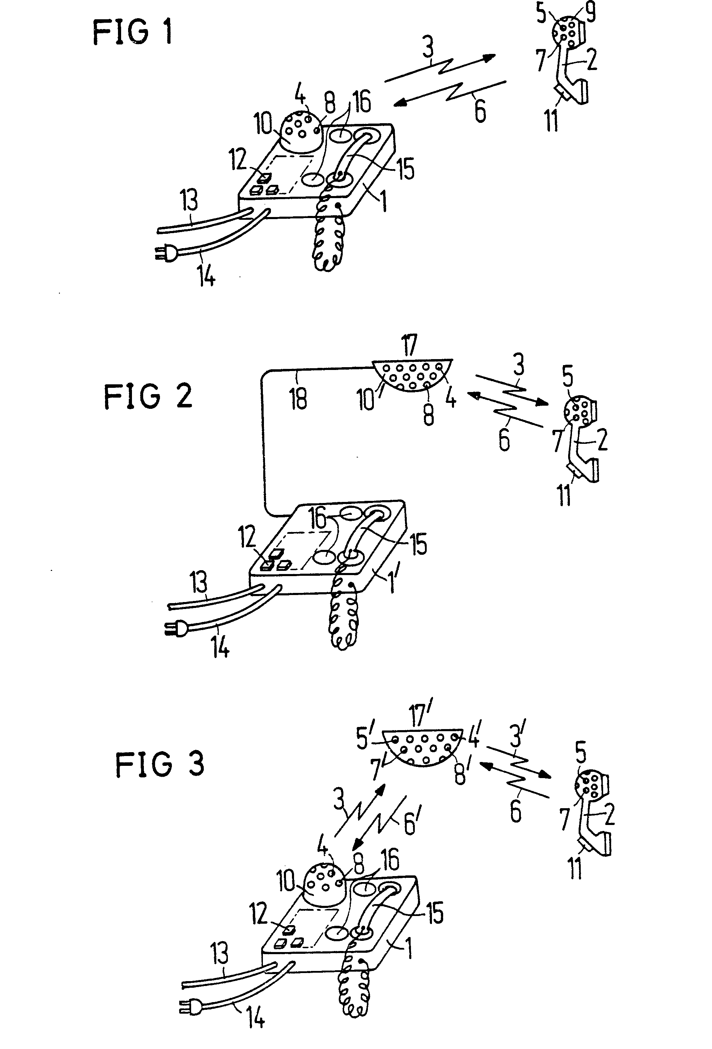

(57) Die Erfindung bezieht sich auf eine Teilnehmerstation mit einem Grundapparat (1) und einem schnurlosen Handapparat (2), zwischen denen eine Übertragung mittels kurzer PPM- oder PCM-RZ-Impulse im Bereich infraroter Strahlung, gegebenenfalls über eine beispielsweise an einer Zimmerdecke befestigten Relaisstation (17), erfolgt. Die Erfindung sieht hierzu Infrarot-Pulssender (4, 7) und Infrarot-Pulsempfänger (5, 8) vor. Für eine Übertragung mittels PPM sind weiter NF/PPM- und PPM/NF-Umsetzer (20, 25; 19, 26) und für eine Übertragung mittels PCM ein PCM-NRZ/PCM-RZ-Umsetzer (20'), ein PCM-RZ/NF-Umsetzer (26'), ein NF/PCM-RZ-Umsetzer (25') und ein PCM-RZ/PCM-NRZ-Umsetzer (19') vorgesehen. Dabei bedeuten NRZ = non return to zero und RZ = return to zero. Die Verwendung einer wertdiskreten Modulationsart und kurzer Impulse macht nur eine geringe Sendeleistung erforderlich. (Fig. 1 und 2).

Die Übertragung von Wähl- und Sonderzeichen erfolgt nach dem Mehrfrequenzverfahren (MFV). Rufzeichen werden durch Änderung der zwischen Handapparat (2) und Grundapparat (1) übertragenen Impulsfrequenz übermittelt. Eine Überwachungsschaltung (UE) überprüft ständig die Verbindung.

Als IR-Pulsempfänger (5, 8) wird eine Diversity-Schaltung von IR-Photodioden mit anschließendem geregeltem Empfangsverstärker (EV) verwendet.

SIEMENS AKTIENGESELLSCHAFT      Unser Zeichen
Berlin und München              VPA 78 P 6626   EUR

Fernsprech-Teilnehmerstation

Die Erfindung bezieht sich auf eine Fernsprech-Teilnehmerstation mit einem an das Fernsprechnetz angeschlossenen Grundapparat und mit einem schnurlosen Handapparat,
zwischen denen Sprachsignale mittels Infrarotstrahlen
übertragen werden, sowie mit einer Wähleinrichtung.

Eine derartige Teilnehmerstation ist aus der
DE-OS 26 04 652 bekannt. In dieser Druckschrift ist
jedoch keine Lösung für die Übertragung zwischen Hand-
und Grundapparat angegeben.

In der DE-AS 12 26 650 ist eine Teilnehmerstation
beschrieben, bei der die Übertragung mittels modulierter Trägerfrequenzen erfolgt.

Diese Lösung hat den Nachteil, daß Funkwellen nicht auf
einen Raum beschränkt werden können, wodurch sowohl die

P 1 Mai /29.11.79

Abhörgefahr als auch die gegenseitige Störung bei Verwendung mehrerer benachbarter Grundapparate mit schnurlosem Handapparat gegeben ist.

Aus der DE-AS 1 512 073 ist weiter eine Teilnehmerstation bekannt, bei der zwar der Handapparat mit dem Grundapparat durch eine Schnur verbunden ist, jedoch die Sprechadern der Teilnehmerstation mit dem Vermittlungsnetzwerk drahtlos über photonengekoppelte Halbleiterbauteile verbunden sind.

Aus der DE-OS 2 431 937 sind noch Schulungs- und Konferenzanlagen bekannt, bei der bewegliche Stationen im Gegenverkehr über eine Zentrale verbunden sind. Sendeseitig wird bei diesen eine Niederfrequenz einer rechteckförmigen Trägerfrequenz mittels Frequenz-, Phasen- oder Impulslängenmodulation aufmoduliert bevor das Modulationsprodukt über einen Infrarot-Sender abgestrahlt wird. Bei diesen zeitkontinuierlichen Modulationsarten wird eine relativ hohe Sendeleistung benötigt, die im tragbaren Teil entweder einen großen Akkumulator erfordert oder nur kurze Sprechzeiten zuläßt. Die elektrische Leistungsaufnahme beträgt ca. 3 W. Zur Ausblendung der Trägerfrequenz des Senders im eigenen Apparat und zum Empfang der Trägerfrequenz des Senders im anderen Apparat ist ein hoher Filteraufwand erforderlich.

Aus der Technischen Mitteilung aus dem Bereich Bauelemente der Siemens AG "Tonübertragung und Fernsteuerverfahren mit Infrarot", Bestellnummer B 1529, ist schließlich eine Infrarot-Tonübertragung für Kopfhörer zum Empfang von Fernseh- und Rundfunkton bekannt. Hier wird Frequenzmodulation angewendet, die eine relativ hohe elektrische Sendeleistung benötigt.

Neben Teilnehmerstationen, über deren Teilnehmerleitungen Analogsignale übertragen werden, sind auch solche bekannt, über deren Teilnehmerleitungen pulsmodulierte Signale übertragen werden.

Aufgabe der Erfindung ist es, eine Fernsprech-Teilnehmerstation mit einem schnurlosen Handapparat und optischer Übertragung zwischen Handapparat und Grundapparat anzugeben, die eine störsichere Übertragung bei geringer mittlerer Sendeleistung ermöglicht, keine Frequenzfilter benötigt und eine Ruf- und Wählvorrichtung besitzt.

Die Lösung dieser Aufgabe ist dadurch gekennzeichnet, daß eine erste Übertragungsstrecke mit einem FS/PULS-Umsetzer und mit einem ersten IR-Pulssender im Grundapparat, mit einem ersten optischen Übertragungskanal sowie mit einem ersten IR-Pulsempfänger und mit einem PULS/NF-Umsetzer im Handapparat vorgesehen ist, daß eine zweite Übertragungsstrecke mit einem NF/PULS-Umsetzer und mit einem zweiten IR-Pulssender im Handapparat, mit einem zweiten optischen Übertragungskanal sowie mit einem zweiten IR-Pulsempfänger und mit einem PULS/FS-Umsetzer im Grundapparat vorgesehen ist, daß im Grundapparat und/oder im Handapparat eine Nachziehschaltung zur Phasensynchronisation vorgesehen ist und daß im Hand- und/oder Grundapparat eine Rufvorrichtung vorgesehen ist.

Die verwendeten Abkürzungen haben die folgende Bedeutung: NF = Niederfrequenz, PPM = Pulsphasenmodulation, PCM = Pulscodemodulation (einschließlich Pulsdeltamodulation), NRZ = non return to zero, RZ = return to

-4-      VPA 78 P 6626 EUR

zero, IR-Infrarot, MFV = Mehrfrequenzverfahren,
IWV = Impulswählverfahren, MFS =Mehrfrequenzsignal
(im Sendeteil), MFE = Mehrfrequenzsignal (im
Empfangsteil), FS = Fernsprechsignal auf der Teilnehmerleitung .

Bei dieser Lösung wird eine geringe Sendeleistung
benötigt, da eine diskontinuierliche Modulationsart
angewendet wird und nur kurze Impulse beispielsweise
einer Breite von ca.0,1 bis 1 µs und einem Abstand von
beispielsweise 15 µs bis 125 µs gesendet werden.

Bei einem vorteilhaften Ausführungsbeispiel wird
Pulsphasenmodulation PPM verwendet. Als FS/PULS-Umsetzer ist ein NF/PPM-Umsetzer, als PULS/NF-Umsetzer
ist ein PPM/NF-Umsetzer, als NF/PULS-Umsetzer ist ein
NF/PPM-Umsetzer und als PULS/FS-U$_m$setzer ist ein
PPM/NF-Umsetzer vorgesehen.

Die Pulsphasenmodulation hat den Vorteil, daß man
gegenüber anderen Modulationsarten bei gleichbleibender Übertragungsqualität mit der geringsten Sendeleistung auskommt.

Eine weitere vorteilhafte Ausführung überträgt das
Fernsprechsignal durch PCM-RZ-Modulation. Auch hier
ist eine energiesparende Modulation gegeben. Wird im
Fernsprechamt bereits mit PCM-NRZ gearbeitet, so ist
die Umsetzung in PCM-RZ-Signale besonders einfach.

Weitere vorteilhafte Ausgestaltungen der Erfindung
sind in den Unteransprüchen angegeben.

0027833

Anhand von Ausführungsbeispielen wird die Erfindung näher erläutert.

Fig. 1 zeigt eine erfindungsgemäße Teilnehmerstation,

Fig. 2 zeigt eine erfindungsgemäße Teilnehmerstation mit einer ersten Variante einer Relaisstation,

Fig. 3 zeigt eine erfindungsgemäße Teilnehmerstation mit einer zweiten Variante einer Relaisstation,

Fig. 4 zeigt ein Blockschaltbild einer erfindungsgemäßen Teilnehmerstation für PPM, über deren Teilnehmerleitung NF-Signale übertragen werden,

Fig. 5 zeigt ein Impulsdiagramm eines Zweiwegumsetzers dieser Teilnehmerstation,

Fig. 6 zeigt ein Blockschaltbild einer weiteren Ausführungsform der erfindungsgemäßen Teilnehmerstation,

Fig. 7 zeigt ein Blockschaltbild einer Wählzeichenverarbeitung,

Fig. 8 zeigt ein Blockschaltbild eines Wählzeichendemodulators,

Fig. 9 zeigt ein Blockschaltbild eines Nulldetektors,

Fig.10 zeigt ein Blockschaltbild einer Relaisstation einer zweiten Variante,

Fig.11 zeigt ein Prinzipschaltbild eines NF/PPM-Umsetzers,

Fig.12 zeigt ein Zeitdiagramm des NF/PPM-Umsetzers,

Fig.13 zeigt ein Prinzipschaltbild einer Konstantstromquelle,

Fig.14 zeigt ein Prinzipschaltbild eines PPM/NF-Umsetzers mit einer Nachziehschaltung zur Phasensynchronisation,

Fig.15 zeigt ein Zeitdiagramm des PPM/NF-Umsetzers,

0027833

Fig. 16 zeigt ein Blockschaltbild des Sendeteils eines Handapparates mit einer Wähleinrichtung,

Fig. 17 zeigt ein Blockschaltbild des Empfangsteils eines entsprechenden Grundapparates,

Fig. 18 zeigt ein Blockschaltbild des Handapparates mit einer Rufeinrichtung,

Fig. 19 zeigt ein Blockschaltbild des Empfangsteils eines entsprechenden Grundapparates mit einer Frequenzerkennung,

Fig. 20 zeigt ein Ausführungsbeispiel einer Frequenzerkennungsschaltung,

Fig. 21 zeigt ein Schaltungsbeispiel für eine Überwachungsschaltung,

Fig. 22 zeigt ein Blockschaltbild eines IR-Diversity-Pulsempfängers mit daran angeschlossenem PPM/NF-Umsetzer sowie einem schematisch dargestellten Sendeteil,

Fig. 23 das Blockschaltbild eines regelbaren Empfangsverstärkers und

Fig. 24 eine Summationsschaltung eines optoelektronischen Wandlers.

Fig. 1 zeigt eine erfindungsgemäße Teilnehmerstation mit einem Grundapparat 1 und einem schnurlose Handapparat 2.

Am Grundapparat 1 befindet sich eine Halbkugel 10, die den Ausgang eines IR-Pulssenders 4 und den Eingang eines IR-Pulsempfängers 8 enthält. Über der Halbkugel 10 sind die Eingänge weiterer parallel geschalteter IR-Pulssender und die Eingänge weiterer parallel geschalteter Pulsempfänger verteilt. Der Grundapparat 1 enthält weiter eine Wähleinrichtung 12, ein Kabel 13, mit dem über eine Teilnehmerleitung die Verbindung zum Fernmeldenetz hergestellt wird, ein Kabel 14, mit dem die Stromversorgung im Grundapparat 1 aus dem Netz gespeist wird und einen Handapparat 15 mit Schnur.

Der schnurlose Handapparat 2 enthält eine Kugelfläche 9 mit dem Ausgang eines IR-Pulssender 7 und dem Eingang eines IR-Pulsempfängers 5. Über die Kugelfläche sind die Ausgänge weiterer parallel geschalteter IR-Pulssender und die Eingänge weiterer parallel geschalteter IR-Pulsempfänger verteilt. Der schnurlose Handapparat 2 enthält weiter eine Wähleinrichtung 11.

Zwischen dem IR-Pulssender 4 und dem IR-Pulsempfänger 5 befindet sich ein optischer Übertragungskanal 3. Zwischen dem IR-Pulssender 7 und dem IR-Pulsempfänger 8 ist ein optischer Übertragungskanl 6 angeordnet. Damit sich diese beiden Übertragungskanäle nicht gegenseitig stören, wird entweder mit infraroter Strahlung unterschiedlicher Wellenlänge oder im Zeitmultiplex gearbeitet.

Der schnurlose Handapparat 2 befindet sich außerhalb der Betriebszeiten in der Aufnahmeeinrichtung 16 des Grundapparates 1. Während dieser Zeit kann ein im schnurlosen Handapparat 2 befindlicher Akkumulator aufgeladen werden. Wird der schnurlose Handapparat 2 aus der Aufnahmeeinrichtung 16 entnommen, so besteht eine Nachrichtenverbindung über die optischen Übertragungskanäle 3 und 6.

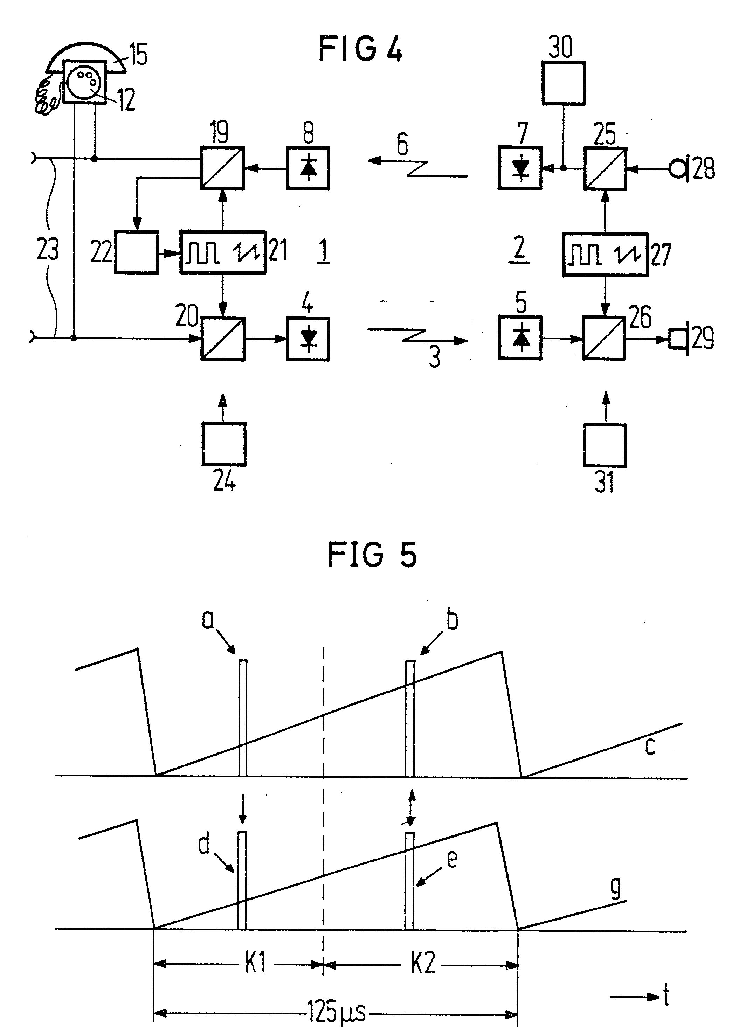

Die Wirkungsweise der Teilnehmerstation wird mit der Beschreibung des Blockschaltbildes in Fig. 4 später näher erläutert.

Fig. 2 zeigt eine erfindungsgemäße Teilnehmerstation mit einer Relaisstation 17. Diese entspricht der Anordnung in der Halbkugel 10 des Grundapparates 1 nach Fig. 1. Die Verbindung zwischen dem Rest-Grundapparat 1' und der Relaisstation 17 erfolgt über eine Drahtverbindung 18, über die NF- oder PCM-Signale übertragen werden.

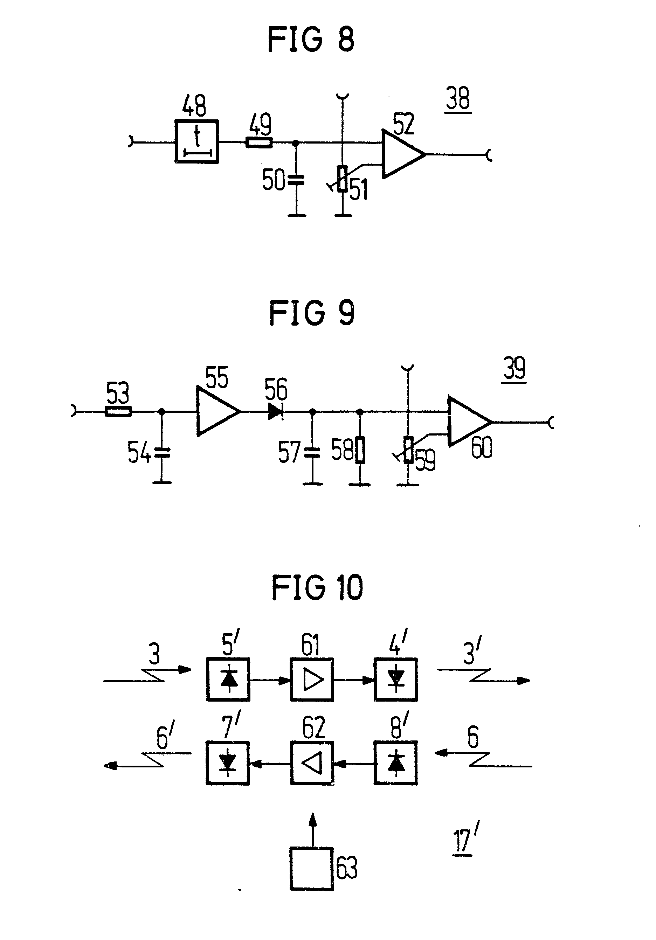

Fig. 3 zeigt eine erfindungsgemäße Teilnehmerstation mit einer Relaisstation 17' anderer Art. Diese Relaisstation 17' ist in die optischen Übertragungskanäle 3 und 6 eingeschaltet, so daß sich Kanalabschnitte 3, 3', 6 und 6' ergeben. Die Relaisstation 17' enthält zusätzliche IR-Pulssender 4' und 7' sowie zusätzliche Pulsempfänger 5' und 8'. Die Wirkungsweise der Relaisstation 17' ergibt sich aus dem Blockschaltbild in Fig. 10.

Fig. 4 zeigt ein Blockschaltbild einer erfindungsgemäßen Teilnehmerstation mit dem Grundapparat 1 und dem schnurlosen Handapparat 2.

Der Grundapparat 1 enthält den IR-Pulssender 4, den IR-Pulsempfänger 8, einen Sägezahngenerator 21, eine Nachziehschaltung 22, die Wähleinrichtung 12, den Handapparat 15 mit Schnur und eine Stromversorgung 24.

Wird beispielsweise Pulsphasenmodulation (PPM) verwendet, so wird mit dem Bezugszeichen 19 ein PPM/NF-Umsetzer, mit dem Bezugszeichen 20 ein NF/PPM-Umsetzer und mit dem Bezugszeichen 21 ein Sägezahngenerator bezeichnet.

Der schnurlose Handapparat 2 enthält den IR-Pulssender 7, den IR-Pulsempfänger 5, bei PPM einen NF/PPM-Umsetzer 25 und einen PPM/NF-Umsetzer 26 sowie einen Sägezahngenerator 27, ein Mikrofon 28, einen Hörer 29, eine Ruf- oder Wähleinrichtung 30 und eine Stromversorgung 31.

Trifft auf den Adern 23 der Teilnehmerleitung ein Sprachsignal ein, so wird dieses im NF/PPM-Umsetzer 20 in PPM umgesetzt und über den IR-Pulssender 4 in den optischen Übertragungskanal 3 abgestrahlt. Dieses Signal wird im IR-Pulsempfänger 5 aufgenommen und über den PPM/NF-Umsetzer 26 an den Hörer 29 abgegeben. Eine Antwort läuft über das Mikrofon 28, den NF/PPM-Umsetzer 25, den IR-Pulssender 7, den optischen Übertragungskanal 6, den IR-Pulsempfänger 8 und den PPM/NF-Umsetzer 19 zu den Adern 23 der Teilnehmerleitung zurück.

Eine Wähleinrichtung kann sich im Grundapparat 1 und/ oder im schnurlosen Handapparat 2 befinden. Die Anordnung 30 im schnurlosen Handapparat 2 kann entweder eine Ruf- oder eine Wähleinrichtung sein. Handelt es sich bei dieser nur um eine Rufeinrichtung, so muß die Wahl von einer Person an einer Hauptteilnehmerstation durchgeführt werden. Ist die Anordnung 30 eine Wähleinrichtung, so kann der Partner unmittelbar angewählt werden.

Der NF/PPM-Umsetzer 25 sowie der PPM/NF-Umsetzer 26 werden aus einem gemeinsamen Sägezahngenerator 27 und der NF/PPM-Umsetzer 20 sowie der PPM/NF-Umsetzer 19 werden durch den gemeinsamen Sägezahngenerator 21 angesteuert. Die Synchronisation beider Sägezahngeneratoren 21 und 27 erfolgt über die Nachziehschaltung 22.

Fig. 5 zeigt ein Impulsdiagramm zur PPM-Übertragung zwischen Hand- und Grundapparat.

Vom freilaufenden Sägezahngenerator 27 des Handapparates wird der Sägezahn c erzeugt, vom nachgezogenen Sägezahngenerator 21 des Grundapparates der Sägezahn g.
Eine Sägezahnperiode von beispielsweise 125 µs ist
in zwei Kanäle K1 und K2 aufgeteilt. Im Kanal K1
werden PPM-Impulse vom Handapparat zum Grundapparat,
im Kanal K2 werden PPM-Impulse vom Grund- zum Handapparat übertragen. Vom IR-Pulssender 7 des Handapparates wird ein PPM-Impuls a ausgesendet und vom
IR-Pulsempfänger 8 des Grundapparates wird er, jetzt
mit d bezeichnet, empfangen. Vom IR-Pulssender 4 des
Grundapparates wird der PPM-Impuls e ausgesendet, der,
empfangsseitig mit b bezeichnet, vom IR Pulsempfänger 5 des Handapparates empfangen wird. Der Hub der
PPM-Impulse beträgt ca. $\pm$ 30 µs.

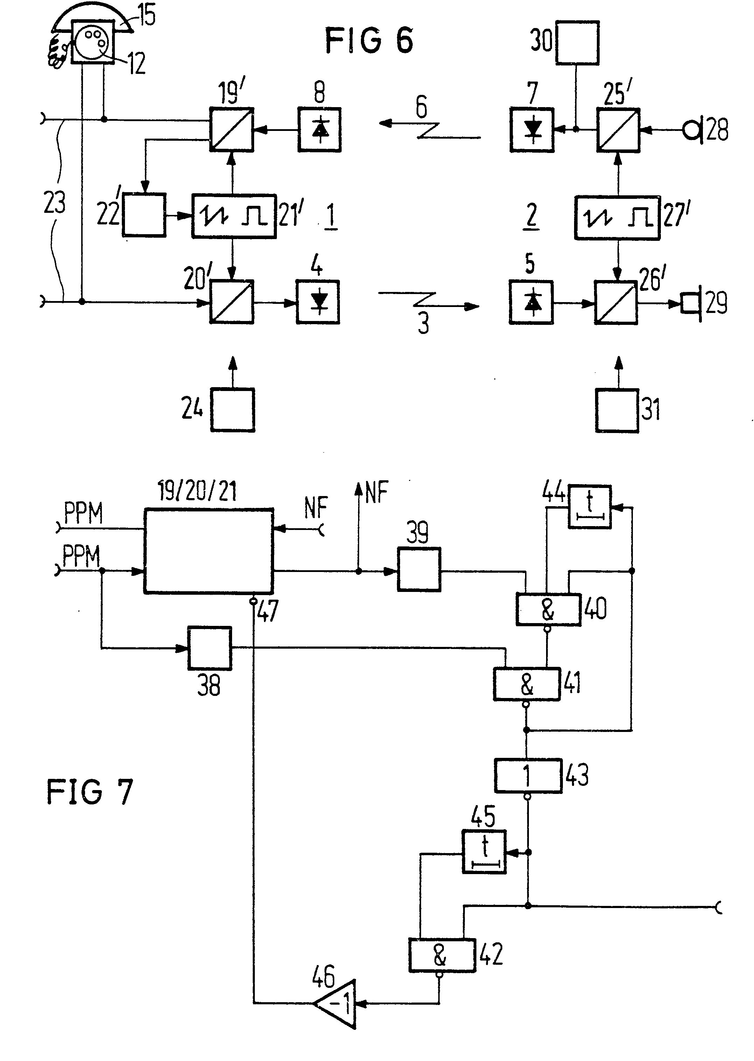

Fig. 6 zeigt das Blockschaltbild eines anderen Ausführungsbeispiels der erfindungsgemäßen Teilnehmerstation. Diese Teilnehmerstation unterscheidet sich
von der nach Fig. 4 durch die Baugruppen 19', 20',
21', 22' und 25', 26', 27'. Wird in dieser Ausführungsform zur Übertragung zwischen Grundapparat 1
und Handapparat 2 PCM-RZ und auf der Teilnehmerleitung PCM verwendet, so trägt im Grundapparat 1 das
Bezugszeichen 20' ein PCM-NRZ/PCM-RZ-Umsetzer und
das Bezugszeichen 19' ein PCM-RZ/PCM-NRZ-Umsetzer.
Beide Umsetzer werden von einem Taktgenerator 21'
versorgt. Der Handapparat 2 enthält einen PCM-RZ/NZ-
Umsetzer 26' und einen NF/PCM-RZ-Umsetzer 25' sowie
einen gemeinsamen Taktgenerator 27'.

Die Wirkungsweise dieser Teilnehmerstation unterscheidet sich von der nach Fig.4 dadurch, daß nicht aus
NF-Signalen kurze PPM-Impulse und umgekehrt abgeleitet
werden, sondern daß breite PCM-NRZ-Impulse in kurze
PCM-RZ-Impulse und diese wiederum auf der Empfangsseite in NF-Signale umgesetzt werden.

## 0027833

Im allgemeinen werden die PCM-RZ-Impulse erst in PCM-NRZ-Impulse umgewandelt, diese werden dann in NF-Signale umgesetzt. Als PCM/PCM-RZ-Umsetzer dient eine monostabile Kippstufe, die bei jeder logischen Eins des seriellen PCM-NRZ-Signals einen kurzen Impuls abgibt. PCM/NF-Umsetzer sind handelsübliche Baugruppen.

Als Nachziehschaltung 22' zur Phasensynchronisation wird eine handelsübliche "Phase locked Loop"- Anordnung verwendet.

Fig. 7 zeigt eine Wählzeichenverarbeitung im Grundapparat 1. Die Anordnung enthält einen Zweiwegumsetzer 19, 20 und 21, einen Wählzeichendemodulator 38, einen Nulldetektor 39, NAND-Gatter 40 und 42, einen Inverter 43, zwei monostabile Kippstufen 44 und 45 mit einer Kippzeit von 125 ms und einen invertierenden Verstärker 46.

Fig. 8 zeigt detailliert den Wählzeichendemodulator 38 nach Fig. 7. Dieser enthält eine monostabile Kippstufe 48 mit einer Kippzeit ungefähr gleich 150 µs, einen Tiefpaß 49, 50, einen Spannungsteiler 51 und einen Komparator 52.

Fig. 9 zeigt eine detaillierte Ausführung eines Nulldetektors 39 nach Fig. 7, mit einem Tiefpaß 53, 54, mit einem Verstärker 55, mit einem Spitzenwertgleichrichter

0027833

-13-     VPA 78 P 6626 EUR

56 bis 58, mit einem Spannungsteiler 39 und mit einem Komparator 60.

Bei völlig störfreier Übertragung könnte das Ausgangssignal des Wählzeichendemodulators 38 bereits in Fernsprechnetz eingespeist werden. Da jedoch der IR-Pulsempfänger 8 stark schwankende Eingangspegel verarbeiten muß, ist eine Regelung erforderlich. Bei abgeschaltetem IR-Pulssender 7 läuft die Regelung des IR-Pulsempfängers 8 auf maximale Verstärkung hoch. Ein auf die Photodiode dieses IR-Pulsempfängers 8 auftreffende Störlicht produziert am Ausgang des Empfängers Impulse, die einen ungewollten Gesprächsanfang verursachen können. Der Gleichstromweg muß daher gegen derartige Störungen gesichert werden.

Die Kontrolle des Gesprächsbeginns vom schnurlosen Handapparat 2 aus erfolgt im Grundapparat 1 durch das Einrasten der Nachziehschaltung 22. Nach Abheben des schnurlosen Hörers 2 und dadurch erfolgte Betätigung eines Kontaktes wird für kurze Zeit, nämlich bis zum Wählbeginn, ein unmodulierter PPM-Puls mit 8 kHz Folgefrequenz gesendet. Am NF-Ausgang des PPM/NF-Umsetzers 19 liegt nach Einrasten der Nachziehschaltung 22 für diese Zeit keine Niederfrequenzspannung. Bei aufgelegtem schnurlosen Handapparat 2 und auf die Photodiode des IR-Pulsempfängers 8 auftrettendem Störlicht liegen hingegen am Ausgang des IR-Pulsempfängers 8 Störspannungen mit hoher Amplitude. Nach Filterung dieser Störspitzen im Tiefpaß 53, 54, Verstärkung im Verstärker 55, Spitzenwertgleichrichtung in der Anordnung 56 bis 58 und Umsetzung der entstehenden Richtspannung mittels eines Komparators 60 erhält man am Ausgang des Nulldetektors 39 ein Gleichstromsignal, dessen abfallende Flanke

-14.-    VPA 78 P 6626 EUR

von 1→0 einen Gesprächsbeginn signalisiert (Fig. 9).

Unter Verwendung des Wählzeichendemodulators 38 (Fig. 8) erhält man nach entsprechender logischer Verknüpfung 40 bis 43 schließlich ein gesichertes Ausgangssignal an der Klemme 47 (Fig. 7).

Fig. 10 zeigt eine Relaisstation 17' nach Fig. 3. Im optischen Übertragungskanal 3 liegen ein IR-Pulsempfänger 5', ein Verstärker und Regenerator 61 und ein IR-Pulssender 4'. Im optischen Übertragungskanal 6 liegen ein IR-Pulsempfänger 8', ein Verstärker und Regenerator 62 und ein IR-Pulssender 7'. Außerdem ist eine Stromversorgung 63 vorgesehen. Die Wirkungsweise der Anordnung ist dieser Figur unmittelbar zu entnehmen.

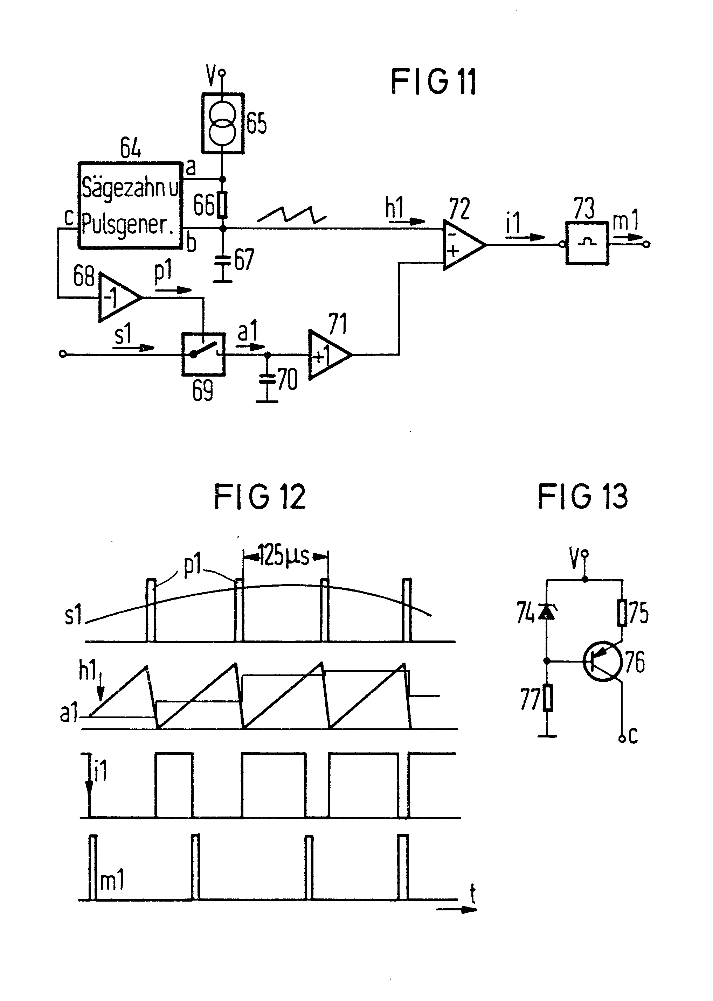

Figur 11 zeigt einen NF/PPM-Umsetzer. Dieser enthält einen Sägezahn- und Pulsgenerator 64, der beispielsweise mit dem Baustein NE 555 der Firma Texas oder Signetics aufgebaut ist. An seinen Anschluß 64a ist eine Konstantstromquelle 65 angeschaltet, deren zweiter Anschluß an die Versorgungsspannung V gelegt ist. Vom Anschluß 64a ist ein Widerstand 66 zu einem weiteren Anschluß 64b des Sägezahn- und Pulsgenerators 64 geschaltet. Der Anschluß 64b liegt über einen Kondensator 67 an Masse. An diesem Anschluß 64b erzeugt der Sägezahn- und Pulsgenerator 64 eine Sägezahnspannung. An seinem Pulsausgang 64c erzeugt er eine Impulsfolge; die Länge dieser Impulse entspricht der Abfallzeit des Sägezahnes. Der Ausgang 64c ist mit dem Eingang eines Inverters 68 verbunden, dessen Ausgang einen Schalter 69 steuert. An den Eingang dieses Schalters ist das Niederfrequenzsignal s1 angeschlossen; der Ausgang dieses Schalters ist mit einem an Masse geschalteten Kondensator 70 und einem Entkopplungsverstärkers 71 verbunden. Der Ausgang des Entkopplungsverstärkers 71 ist an den nichtinvertierenden Eingang eines Komparators 72 angeschaltet, dessen invertierender Eingang an den Anschluß 64b des Sägezahn- und Pulsgenerators 64 angeschlossen ist. Der Ausgang des Komparators 72 geht auf den invertierenden Steuereingang einer monostabilen Kippstufe 73, die an ihrem Ausgang ein pulsphasenmoduliertes Signal m1 abgibt.

Die Funktion des NF/PPM-Umsetzers 64 wird anhand der Figur 12 näher erläutert. Die vom Sägezahn- und Pulsgenerator 64 an seinem Ausgang 64c erzeugte Impulsfolge wird von dem Inverter 68 in eine positive Impulsfolge p1 umgesetzt. Die Impulse haben einen gleichbleibenden Abstand von beispielsweise 125 µs. Während der Impulsdauer von p1 ist der Schalter 69 geschlossen. Während dieser Zeit wird das Niederfrequenzsignal s1 zum Kondensator 70 durchgeschaltet. Öffnet sich der Schalter 69 wieder, bleibt die mit a1 bezeichnete Spannung am Kondensator 70 stehen. Der Entkopplungsverstärker 71 verhindert, daß sich die Kondensatorspannung entlädt. Der Schalter 69, der Kondensator 70 und der Entkopplungsverstärker 71 stellen also eine "Sample and Hold"-Schaltung dar. Der Ausgang des Entkopplungsverstärkers 71 ist mit dem nichtinvertierenden Eingang des Komparators 73 verbunden; am invertierenden Eingang liegt die vom Sägezahn- und Pulsgenerator 64 erzeugte Sägezahnspannung h1 an. Wird die Sägezahnspannung h1 größer als die von der Sample and Hold-Schaltung abgegebene Vergleichsspannung a1, dann fällt das Ausgangssignal i1 des Komparators 72 von der logischen Eins auf die logische Null. Sinkt während des Abfallens der Sägezahnspannung h1 diese unter die Samplespannung a1, so
geht der Ausgang des Komparators 72 wieder auf die
logische Eins. Der Wechsel der Ausgangsspannung des
Komparators 72 von der logischen Eins auf die logische
Null wird benutzt, um eine monostabile Kippstufe 73 zu
triggern, welche die pulsphasenmodulierten Impulse m1 erzeugt, deren Pulsbreite ca. 1μs beträgt.

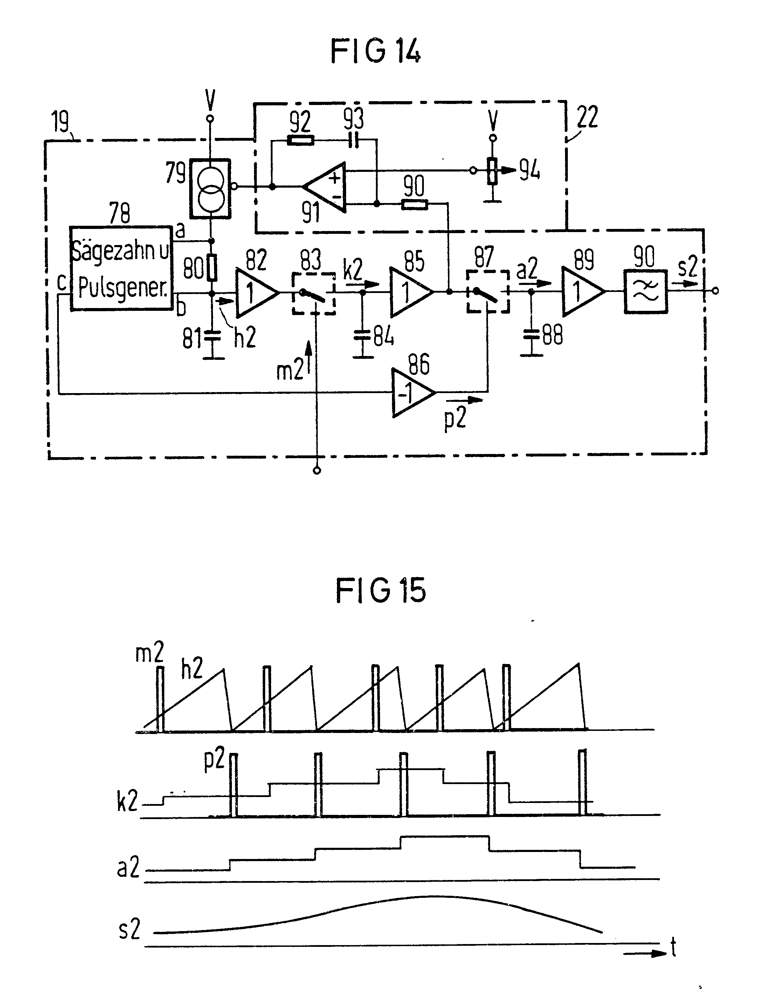

In Figur 13 ist eine Konstantstromquelle dargestellt,
wie sie in dem NF/PPM-Umsetzer nach Figur 11 und ähnlich in dem PPM/NF-Umsetzer nach Figur 14 Verwendung
findet. Die Konstantstromquelle 65 enthält einen PNP-
Transistor 76, dessen Emitter über einen ohmschen,
Widerstand 75 an die Versorgungsspannung V gelegt ist.
Zwischen Versorgungsspannung V und der Basis des PNP-
Transistors 76 ist eine Z-Diode 74 geschaltet; der
Strom für die Z-Diode und der Basisstrom für den Transistor 76 werden über einen von der Basis des PNP-Transsistor an Masse geschalteten Widerstand 77 geliefert.
Der Kollektor des PNP-Transistors 76 ist an den Anschlußpunkt 74a des Sägezahn- und Pulsgenerators
64 angeschlossen.

Da die Spannung an der Basis des PNP-Transistors 76
durch die Z-Diode 74 konstant gehalten wird, fließt
auch ein konstanter Strom im Widerstand 75 und damit
ebenfalls aus dem Kollektoranschluß C.

In Figur 14 ist das Prinzipschaltbild eines PPM/NF-
Umsetzers dargestellt. Dieser enthält ebenfalls einen
Sägezahn- und Pulsgenerator 78, der zweckmäßigerweise
auch mit dem Baustein NE 555 aufgebaut ist. Der Anschlußpunkt 78a des Sägezahn- und Pulsgenerators 78 ist über eine Konstantstromquelle 79 an die Versorgungsspannung V geschaltet. Vom Anschluß 78a ist ein Widerstand
80 an einen weiteren Anschluß 78b des Sägezahn- und
Pulsgenerators 78 geschaltet; dieser Anschluß 78b ist
über einen Kondensator 81 an Masse geschaltet. Am Anschluß 78b erzeugt der Sägezahn- und Impulsgenerator 78
eine Sägezahnspannung; an seinem Pulsausgang 78c gibt
er eine Impulsfolge ab. Die Länge der Impulse entspricht
der Abfallzeit des Sägezahnes. Der Anschluß 78b des
Sägezahn- und Pulsgenerators 78 ist über einen Entkopplungsverstärker 82 auf den Eingang einer ersten Sample
and Hold-Schaltung geschaltet, die aus dem Schalter 83,
dem nach Masse geschalteten Kondensator 84 und einem
zweiten Entkopplungsverstärker 85 besteht. Der Ausgang
der ersten Sample and Hold-Schaltung 83, 84, 85 ist dem
Eingang einer zweiten Sample and Hold-Schaltung 87, 88,
89 zugeführt, die aus einem Schalter 87, einem an Masse
geschalteten Kondensator 88 und einem dritten Entkopplungsverstärkers 89 besteht. Der Ausgang dieses dritten
Entkopplungsverstärkers 89 ist einem Tiefpaß 90 zugeführt, der ein Niederfrequenzsignal abgibt. Der Schalter 83 der ersten Sample and Hold-Schaltung 83, 84, 85
wird von den empfangenen PPM-Impulsen m2 gesteuert. An
den Ausgang 78c des Sägezahn- und Pulsgenerators ist
ein Inverter 86 angeschaltet, der den Schalter 87 der
zweiten Sample and Hold-Schaltung 87, 88, 89 steuert.

Die Wirkungsweise des PPM/NF-Umsetzers wird anhand der
Figur 15 erläutert. Die empfangenen PPM-Impulse m2
schalten kurzzeitig während der Impulsdauer die Sägezahnspannung h2 vom Ausgang des ersten Entkopplungsverstärkers 82 über den Schalter 83 an den Kondensator
84 und den zweiten Entkopplungsverstärker 85 durch. Der Momentanwert der durchgeschalteten Sägezahnspannung h2 bleibt bis zum nächsten PPM-Impuls m2 am Ausgang des zweiten Entkopplungsverstärkers 85 erhalten. Den Spannungsverlauf zeigt die Stufenfunktion k2. Die zweite Sample and Hold-Schaltung 87, 88, 89 setzt die Stufenfunktion k2 in eine zeitäquidistante Amplitudenmodulation a2 um. Der Schalter 87 der zweiten Sample and Hold-Schaltung 87, 88, 89 wird hierbei von Impulsen p2 gesteuert; erzeugt werden diese Impulse in negierter Form vom Sägezahn- und Pulsgenerator 78. Der am Anschluß 78 c angeschaltete Inverter 86 verwandelt sie in positive Impulse p2. Am Ausgang der zweiten Sample and Hold-Schaltung ist ein Tiefpaß 90 angeschlossen, der das amplitudenmodulierte Signal a2 glättet. Am Ausgang des Tiefpasses 90 erhält man wieder ein Niederfrequenzsignal s2, das dem ausgesendeten Niederfrequenzsignal s1 entspricht.

Der in Figur 14 dargestellte PPM/NF-Umsetzer enthält noch die Nachziehschaltung 22 zur Phasensynchronisation. Diese enthält einen zusätzlichen Operationsverstärker 91, dessen invertierender Eingang über einen Widerstand 90 an den Ausgang des zweiten Entkopplungsverstärkers 85 angeschaltet ist. Der Ausgang des zusätzlichen Operationsverstärkers 91 ist über eine aus einem Widerstand 92 und einem Kondensator 93 bestehende Reihenschaltung auf den invertierenden Eingang zurückgekoppelt. Der Ausgang des Operationsverstärkers 91 greift in die steuerbare Konstantstromquelle 79 ein. Der nichtinvertierende Eingang des Operationsverstärkers 91 ist an den Abgriff eines Spannungsteilers 91 gelegt, dessen Anschlüsse mit Masse bzw. der Versorgungsspannung V verbunden sind.

Die Erläuterung der Funktion erfolgt anhand des Zeitdiagrammes in Fig. 15. Wenn sich im PPM/NF-Umsetzer die Phasenlage der Sägezahnspannung h2 gegenüber den empfangenen PPM-Impulsen m2 ändert, so ändert sich auch die mittlere Gleichspannung am Ausgang der ersten Sample and Hold-Schaltung 83, 84, 85. Dadurch wird durch den als PI-Regler arbeitenden Operationsverstärker 91 die steuerbare Konstantstromquelle 79 beeinflußt und der Ladestrom des Kondensators 81 des Sägezahn- und Pulsgenerators 78 soweit geändert, bis die ursprüngliche Phasenlage wieder erreicht ist.

Bei einem Zweiwegumsetzer, der einen NF/PPM-Umsetzer und einen PPM/NF-Umsetzer enthält, wird ein gemeinsamer Sägezahn- und Pulsgenerator verwendet. Die übrigen Schaltelemente bleiben gleich. Wie bereits beschrieben, ist bei einem Zweiwegumsetzer eine Sägezahnperiode in zwei Kanäle, einen Sende- und einen Empfangskanal aufgeteilt.

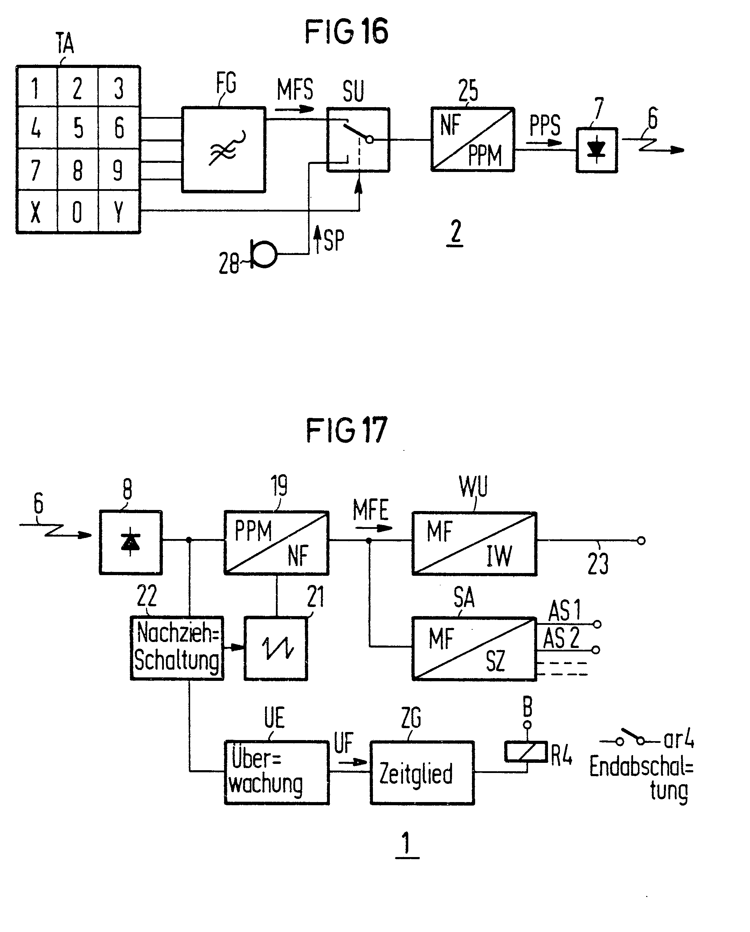

In Fig. 16 ist ein Ausführungsbeispiel einer Wähleinrichtung dargestellt. Die Übertragung zwischen Hand- und Grundapparat erfolgt in dem Ausführungsbeispiel durch PPM. Aus Vereinfachungsgründen wurde nur der Sendeteil des Handapparates 2 dargestellt. Die Ruf- oder Wähleinrichtung 30 des Handapparates 2 wurde durch eine Wähleinrichtung TA und einen Frequenzgenerator FG ersetzt. Von der für Tastenwahl geeigneten Wähleinrichtung TA können sowohl Wählzeichen 0 ... 9 als auch Sonderzeichen, beispielsweise X, Y ausgegeben werden. Die Wähleinrichtung steuert einen Frequenzgenerator FG, der an seinem Ausgang ein dem gewählten Wähl- oder Sonderzeichen entsprechendes Frequenzgemisch MFS abgibt, das aus mindestens zwei unterschiedlichen Frequenzen besteht. Über einen weiteren Ausgang der Wähleinrichtung TA wird bei der Aussendung von Wähl- oder Sonderzeichen ein Umschalter SU so gesteuert, daß dieses Frequenzgemisch MFS am Eingang des NF/PPM-Umsetzers 25 anliegt. Das Frequenzgemisch wird vom NF/PPM-Umsetzer in ein pulsphasenmoduliertes Signal PPS umgesetzt und einem IR-Pulssender 7 zugeführt, der dieses Signal über einen Übertragungskanal 6 aussendet. Wird statt eines Wähl- oder Sonderzeichens Sprache übertragen, so schaltet der Umschalter SU das vom Mikrofon 28 kommende Sprachsignal SP an den NF/PPM-Umsetzer 25 durch.

In Fig. 17 ist der Empfangsteil des entsprechenden Grundapparates 2 der Fernsprech-Teilnehmerstation dargestellt. Der Empfangsteil besteht, wie beim bereits in Fig. 4 beschriebenen Grundapparat 1, aus dem IR-Pulsempfänger 8, dem an diesen angeschlossen der PPM/NF-Umsetzer 19, der Nachziehschaltung 22 und dem Sägezahngenerator 21. Hinzu gekommen sind beim neuen Grundapparat 1 ein am Ausgang des PPM/NF-Umsetzers 19 angeschlossener MFV/IWV-Umsetzer WU, dessen Ausgang auf die Teilnehmerleitung 23 geschaltet ist, eine ebenfalls am Ausgang des PPM/NF-Umsetzers 19 angeschaltete Sonderzeichenerkennungsschaltung SA und eine an die Nachziehschaltung 22 angeschlossene Überwachungsschaltung UE mit einem nachgeschalteten Zeitglied ZG.

Die Aufgabe des MFV/IWV-Umsetzers ist es, die MFV-Wählzeichen in übliche Wählimpulse nach dem Impulswählverfahren umzusetzen. Ist das Fernsprechamt in der Lage, die MFV-Wählzeichen selbst zu verarbeiten, kann dieser Umsetzer entfallen.

An den Ausgang des PPM/NF-Umsetzers 19 ist ebenfalls die Sonderzeichenauswerteschaltung SA angeschlossen. Werden Sonderzeichen empfangen, die aus einem Frequenzgemisch von mindestens zwei Frequenzen bestehen, so gibt die Sonderzeichenauswerteschaltung SA an ihren Ausgängen AS1, AS2, ... ein dem empfangenen Sonderzeichen entsprechendes Signal ab. Dadurch können verschiedene Funktionen, wie beispielsweise Rufen der Sekretärin, Annahme des Gesprächs und Auftrennen der Verbindung gesteuert werden.

An die Nachziehschaltung 22 ist eine Überwachungsschaltung UE angeschaltet, die den Synchronismus zwischen dem eigenen Sägezahngenerator 21 und den empfangenen PPM-Impulsen überwacht. Dadurch wird kontrolliert, ob die Verbindung zwischen Hand- und Grundapparat über die optischen Übertragungskanäle 3 und 6 besteht. Ist diese Verbindung gestört, so gibt die Überwachungsschaltung UE an ihrem Ausgang ein Fehlersignal UF ab. Liegt dieses Fehlersignal UF für längere Zeit am Eingang des Zeitgliedes ZG an, so gibt das Zeitglied ein Signal ab, das das Auftrennen der Fernsprechverbindung auslöst. Die Endabschaltung wird beispielsweise durch das Relais R4 und seinen dazu gehörigen Kontakt ar4 bewirkt.

Der Anschlußpunkt B des Relais ist, abhängig von der Art der Ansteuerung des Relais, an eine Versorgungsspannung oder Masse gelegt.

0027833

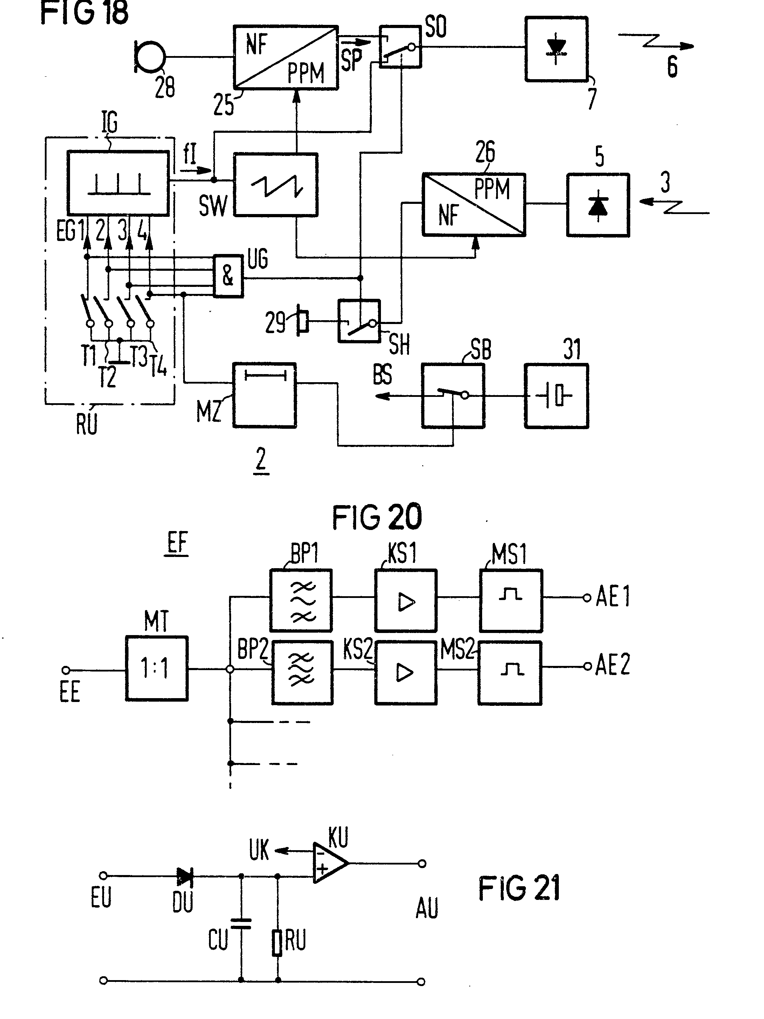

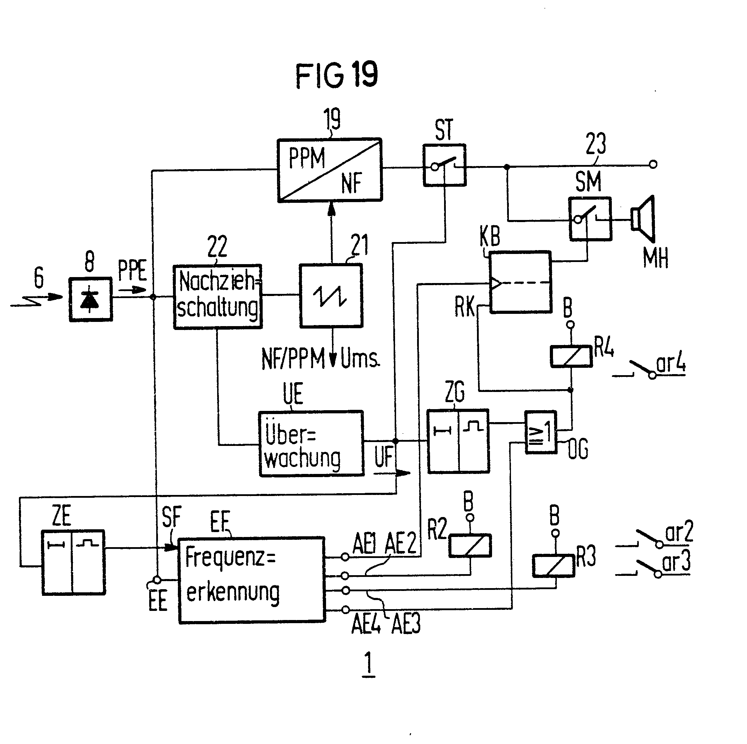

In Fig. 18 ist ein Handapparat 2 mit einer Rufeinrichtung dargestellt. In diesem Ausführungsbeispiel
wird PPM-Übertragung zwischen Grund- und Handapparat
verwendet. Der Sägezahngenerator 27 ist hier durch
einen steuerbaren Impulsgenerator IG und einen Sägezahnwandler SW ersetzt. Die Rufeinrichtung 30 ist
durch eine Rufeinrichtung RU ersetzt. Diese Rufeinrichtung besteht beispielsweise aus den Tasten T1
bis T4 und dem von diesen Tasten gesteuerten Impulsgenerator IG. Es ist ferner ein Umschalter SO vorgesehen, der entweder den Ausgang des NF/PPM-Umsetzers 25 oder den Ausgang des Impulsgenerators IG
an den IR-Pulssender 7 durchschaltet. Über einen
weiteren Schalter SH kann der Hörer 29 des Handapparates abgeschaltet werden. Gesteuert werden die
Schalter SO und SH von einem UND-Glied UG, dessen
Eingänge mit den Steuereingängen des Impulsgenerators
IG verbunden sind und ebenfalls von den Tasten
T1 bis T4 gesteuert werden. Von der Taste T4 wird
zusätzlich ein Zeitglied MZ angesteuert, das nach
einer vorgegebenen Zeitverzögerung einen Schalter SB
betätigt und dadurch die Stromversorgung 31 vom
Handapparat abschaltet. Die Batteriespannung BS
liegt dann an keiner Schaltung des Handapparates an.
Es ist natürlich ebenfalls möglich, die Batteriespannung BS nur von einigen Schaltungen des Handapparates abzuschalten.

In dem Ausführungsbeispiel sollen vier Sonderzeichen SZ1 bis SZ4, entsprechend den Tasten T1 bis T4, übertragen werden. Wird beispielsweise die Taste T1 betätigt, so wird dadurch Massepotential an einen ersten Steuereingang EG1 des Impulsgenerators IG angelegt. Der Impulsgenerator verändert dadurch seine Ausgangsfrequenz fI. Gleichzeitig wird mit Betätigung einer Taste Massepotential an einen Eingang des UND-Gliedes UG gelegt (nicht an Masse gelegte Eingänge bedeuten hier ein der logischen Eins entsprechendes Spannungspotential). Geht der Ausgang des UND-Gliedes auf die logische Null, wird über den Schalter SO der Ausgang des Impulsgenerators an den IR-Pulssender 7 geschaltet und die geänderte, einem Sonderzeichen entsprechende, Frequenz fI ausgesendet. Gleichzeitig mit dem Schalter SO wird auch der Schalter SH betätigt, wodurch der Hörer 29 im Handapparat abgeschaltet wird. Dadurch bleiben Störgeräusche, wie sie bei der Übertragung von Sonderzeichen entstehen, dem Benutzer des Handapparates erspart. Mit den Tasten T2 und T3 können weitere Sonderzeichen übertragen werden. Die Taste T4 ist hier als Ende-Taste ausgebildet. Bei ihrer Betätigung wird zuerst eine geänderte Frequenz fI übertragen, wodurch die Fernsprechverbindung aufgetrennt wird und anschließend die Verbindung zwischen Hand- und Grundapparat unterbrochen wird.

In Fig.19 ist der Empfangsteil des Grundapparates 1 der Fernsprechteilnehmerstation dargestellt. Der Empfangsteil besteht, wie beim bereits in Fig. 4 beschriebenen Grundapparat 1, aus dem IR-Pulsempfänger 8, an diesen angeschlossen der PPM/NF-Umsetzer 19, der Nachziehschaltung 22 und dem Sägezahngenerator 21. Hinzu gekommen sind beim Grundapparat 1 die Frequenzerkennungsschaltung EF, die Überwachungsschaltung UE und das daran angeschlossene Zeitglied ZG.
Die anderen Bauelemente dienen zur Veranschaulichung
verschiedener Bedienungsfunktionen bei einer Übertragung der Sonderzeichen.

Die Frequenzerkennungsschaltung EF ist an den Ausgang
des IR-Pulsempfängers 8 angeschaltet. Ihrem Eingang EE
werden die empfangenen Impulse PPE zugeführt. Wird
ein Sonderzeichen empfangen, gibt die Frequenzerkennungsschaltung an einem ihrer Ausgänge AE1 bis AE4
ein dem Sonderzeichen entsprechendes Signal ab. Wird
beispielsweise das Sonderzeichen SZ3 empfangen, so
wird über den Ausgang AE3 der Frequenzerkennungsschaltung EF das Relais R3 angesteuert und der dazugehörige
Kontakt ar3 betätigt. Hierdurch kann beispielsweise die
Gesprächsannahme vom Handapparat aus erfolgen. Wird
das Sonderzeichen SZ1 empfangen, so gibt die Frequenzerkennungsschaltung an ihrem Ausgang AE1 ein Signal ab.
Hierdurch wird eine JK-Kippstufe KG angesteuert und
jeweils in die andere Lage gesetzt. Diese Funktion
wird ausgenutzt, um einen Mithörer MH über einen Schalter SM an den Ausgang des PPM/NF-Umsetzers 19 an- oder
abzuschalten. Der Mithörer MH wird zweckmäßigerweise
an die ankommende Teilnehmerleitung geschaltet.

Durch das Sonderzeichen Z2 wird das Relais R2 und der
dazugehörige Kontakt ar2 betätigt. Hierdurch kann beispielsweise die Sekretärin gerufen oder die "Erdtaste"
betätigt werden. Der Empfang des Sonderzeichens SZ4
bewirkt ein Auftrennen der Fernsprechverbindung. Der
Signalverlauf geht hierbei vom Ausgang AE4 der Frequenzerkennungsschaltung EF über ein ODER-Glied OG,
dessen zweiter Eingang mit dem Ausgang des Zeitgliedes
verbunden ist, zum Relais R4. Der zum Relais gehörige
Kontakt ar4 bewirkt das Auftrennen der Verbindung. Mit dem Sonderzeichen SZ4 wird ebenfalls die JK-Kippstufe KG über den Reset-Eingang RK zurückgestellt und damit der eventuell angeschaltete Mithörer MH abgeschaltet. Die mit B bezeichneten Anschlüsse der Relais R2 bis R4 sind an eine Betriebsspannung angeschlossen.

Der Eingang der Überwachungsschaltung UF ist an einem Ausgang der Nachziehschaltung 22 angeschaltet. Besteht kein Synchronismus zwischen den empfangenen Impulsen PPE und dem eigenen Sägezahngenerator 21, so gibt die Überwachungsschaltung ein Fehlersignal UF ab. Dadurch wird die Schalteinrichtung ST aufgetrennt und es können keine Störungen mehr vom Grundapparat auf die Teilnehmerleitung 23 gelangen. Das Fehlersignal UF ist gleichzeitig auf den Eingang des Zeitgliedes ZG geführt. Ist es längere Zeit vorhanden, gibt das Zeitglied einen Impuls ab, der die Fernsprechverbindung über das ODER-Glied OG und das Relais R4 abschaltet.

Das Fehlersignal UF ist über ein zweites Zeitglied ZE auf einen zusätzlichen Eingang SF der Frequenzerkennungsschaltung EE geführt. Wird ein Sonderzeichen SZ1 bis SZ4 empfangen, gibt die Überwachungsschaltung UE das Fehlersignal UF ab. Nach einer kurzen Zeitverzögerung wird durch das Zeitglied ZE ein Impuls gebildet, der die Frequenzerkennungsschaltung EF aktiviert. Sie gibt ein dem Sonderzeichen entsprechendes Signal an ihren Ausgängen AE1 bis AE4 ab. Anschließend ist die Frequenzerkennungsschaltung wieder abgeschaltet. Durch diese Maßnahme wird ein ungewolltes Ansprechen der Frequenzerkennungsschaltung vermieden.

Eine vorteilhafte Schaltungsanordnung für die Frequenzerkennungsschaltung EF ist in Fig.5 dargestellt.Der Eingang EE der Frequenzerkennungsschaltung ist mit einem

triggerbaren Multivibrator verbunden, an dessen Ausgang jeweils eine Reihenschaltung eines Bandpasses mit einem Spannungskomparator und nachfolgender monostabiler Kippstufe angeschlossen ist. Diese Einrichtung ist für jede einem Sonderzeichen entsprechende Frequenz vorhanden. In Fig.20 wurde der aus Bandpaß, Komparator und monostabiler Kippstufe bestehende Frequenzerkennungsteil nur für zwei unterschiedliche Frequenzen dargestellt. Die vom IR-Empfänger 8 abgegebene Impulsfolge PPE steuert den triggerbaren Multivibrator MT, dessen Ausgangssignal dieselbe Frequenz wie das Eingangssignal, jedoch ein Tastverhältnis von 1:1 besitzt. Wird eine dem Sonderzeichen SZ1 entsprechende Frequenz empfangen, so wird sie von dem Bandpaß BP1 herausgefiltert. Der am Filter angeschlossene Spannungskomparator KS1 verwandelt diese Frequenz wieder in eine Impulsfolge, die der retriggerbaren monostabilen Kippstufe MS1 zugeführt wird. Diese verwandelt die vom Spannungskomparator abgegebene Impulsfolge wieder in ein Dauersignal, das am Ausgang AE1 anliegt. In gleicher Weise werden die anderen Frequenzen entsprechenden Sonderzeichen decodiert.

Ein Schaltungsbeispiel der Überwachungsschaltung UE ist in Fig.21 dargestellt. Die Überwachungsschaltung besteht aus einer Spitzenwertgleichrichtung mit anschließendem Spannungskomparator. Der Eingang EU der Überwachungsschaltung UE ist auf einen Gleichrichter DU geführt, an dessen Ausgang ein Ladekondensator CU mit parallel geschaltetem Widerstand RU angeschlossen ist. An den Ausgang des Gleichrichters ist ebenfalls ein Eingang eines Spannungskomparators KU angeschlossen, dessen zweiter Eingang an einer Vergleichsspannung UK liegt. Die Nachziehschaltung 22 im Grundapparat besteht zweckmäßigerweise aus einem phasenstarren Regelkreis (phase-locked-loop). Der Eingang der Überwachungsschaltung ist an den Ausgang des Tiefpasses
im Regelkreis des phasenstarren Regelkreises angeschlossen. Wenn der Regelbereich der Nachziehschaltung 22 überschritten ist, liegt am Eingang der Überwachungsschaltung eine hohe Spannung. Diese schaltet
über den Gleichrichter DU den Spannungskomparator KU
durch, der an seinem Ausgang AU das Fehlersignal UF
abgibt.

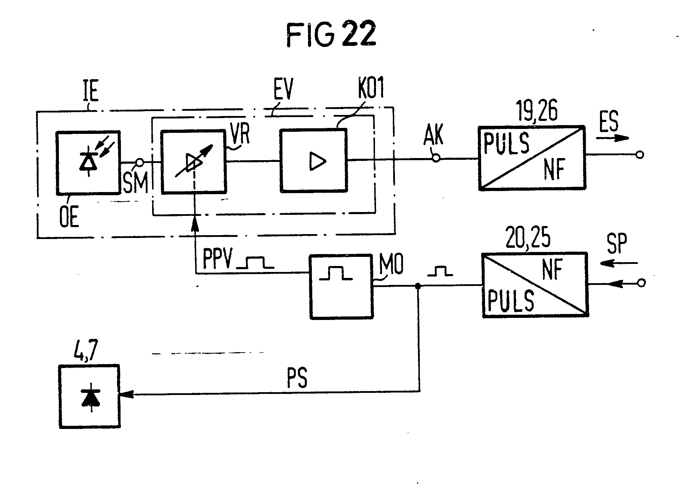

Der in Fig. 22 dargestellte IR-Diversity-Pulsempfänger IE entspricht den IR-Pulsempfängern 5 und 8 aus
Fig. 4. Angeschlossen an den Ausgang des
Diversity-Pulsempfängers IE ist ein PULS/NF-Umsetzer
19, 26, der das empfangene Sprachsignal ES abgibt.
Dargestellt ist ebenfalls noch ein NF/PULS-Umsetzer
20, 25, der das ausgesendete Sprachsignal SP in Impulse PS umsetzt. Diese werden über einen IR-Pulssender 4, 7 ausgesendet. Die Impulse PS werden ebenfalls dem Eingang einer monostabilen Kippstufe MO zugeführt, deren Ausgang in den Empfangsverstärker EV
eingreift. Der IR-Diversity-Pulsempfänger IE enthält
einen optoelektronischen Wandler OE, der mit einem
regelbaren Verstärker VR verbunden ist, dessen Ausgang dem Eingang eines Komparators KO1 zugeführt ist.
Die regenerierten Impulse am Ausgang AK des Komparators KO1 werden dem PULS/NF-Umsetzer 19, 26 zugeführt.

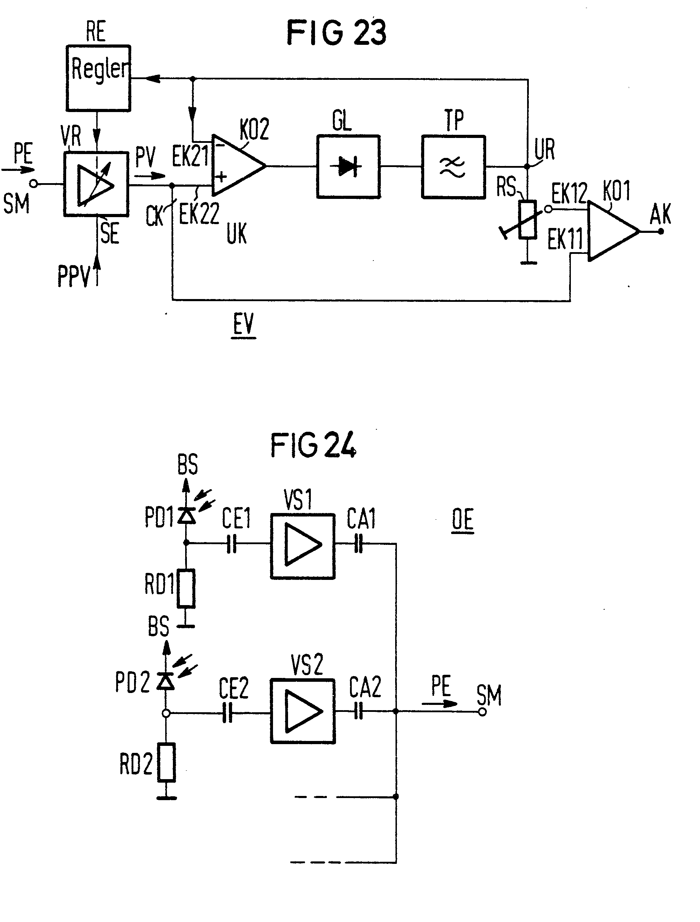

Der in Fig. 23 dargestellte Empfangsverstärker EV enthält einen regelbaren Verstärker VR mit einem Signaleingang SM. Der Ausgang dieses Verstärkers ist mit
dem ersten Eingang EK11 eines ersten Komparators KO1
verbunden und gleichzeitig mit dem nicht invertierenden Eingang EK22 eines zusätzlichen Komparators KO2 verbunden. Der Ausgang dieses zusätzlichen Komparators KO2 ist über einen Gleichrichter GL auf einen Tiefpaß TP geschaltet. Der Ausgang dieses Tiefpasses TP ist gleichzeitig auf den invertierenden Eingang EK21 des zusätzlichen Komparators KO2 und den Eingang eines Reglers RE geführt. Dieser Regler RE bestimmt die Verstärkung des regelbaren Verstärkers VR. Ein zusätzlicher Steuereingang SE des regelbaren Verstärkers dient zum Ausblenden der Sendeimpulse PPS. Über einen Spannungsteiler RS ist der Ausgang des Tiefpasses TP an den zweiten Eingang EK12 des Komparators KO1 angeschlossen.

Über den Signaleingang SM des Empfangsverstärkers EV werden die Empfangsimpulse PE dem regelbaren Verstärker VR zugeführt, der an seinem Ausgang die verstärkten Empfangsimpulse PV abgibt. Diese werden von dem als Abtaststufe dienenden Komparator KO1 abgetastet.

Eine Regelspannung UR für die Verstärkungsregelung wird in einer aus dem zusätzlichen Komparator KO2, dem Gleichrichter GL und dem Tiefpaß TP bestehenden Schaltungsanordnung gewonnen. Am Ausgang des Tiefpasses liegt die Regelspannung UR an. Sie bestimmt über den Regler RE die Verstärkung des regelbaren Verstärkers VR und über den Spannungsteiler RS die Schwelle des Komparators KO1. Wenn das Eingangssignal PE des regelbaren Verstärkers VR so klein ist, daß der Regelbereich nicht mehr ausreicht, so wird auch das Ausgangssignal PV des regelbaren Verstärkers VR kleiner. Der Komparator KO2 gibt daher eine geringere Spannung ab und die Ausgangsspannung UR des Tiefpasses TP sinkt.

ebenfalls. Damit verkleinert sich auch die Schwelle des Komparators KO1 über den Spannungsteiler RS. Die verstärkten Empfangsimpulse PV werden daher noch korrekt abgetastet. Über den Ausgang AK des Komparators KO1 werden die regenerierten Impulse an den PULS/NF-Umsetzer 19, 26 weitergegeben.

Fig.24 zeigt die Schaltungsanordnung des optoelektronischen Wandlers OE. Dieser besteht aus mehreren Diversity-Empfangszweigen. Im ersten Diversity-Empfangszweig ist eine erste Photodiode P1 in Reihe mit einem Widerstand RO1 geschaltet. Ein erster Anschluß (Kathode) der Photodiode ist an die Betriebsspannung gelegt, der Widerstand selbst ist gegen Masse geschaltet. Über einen Kondensator CE1 ist der zweite Anschluß (Anode) der Photodiode mit dem Eingang eines Verstärkers VS1 verbunden. Der Ausgang dieses Verstärkers ist über einen weiteren Kondensator CA1 auf einen Summationspunkt SM geführt. In gleicher Weise ist ein weiterer Diversity- Empfangszweig mit den Bauelementen Photodiode PD2, Widerstand RD2, dem Verstärker VS2 und den Kondensatoren CE2 und CA2 auf den gleichen Summationspunkt SM geschaltet. Weitere Diversity-Empfangszweige der vorhergehend beschriebenen Art können ebenfalls auf den Summationspunkt SM geschaltet werden.

Die von der Photodiode PD1 empfangenen Signale werden, gleichstrommäßig über den Kondensator CE1 entkoppelt, dem Verstärker VS1 zugeführt, der sie verstärkt über den zweiten Koppelkondensator CA1 auf dem Summationspunkt SM schaltet. Entsprechend arbeiten die weiteren auf den Summationspunkt SM geführten Diversity-Empfangszweige. Sind nun auf dem Handapparat die Photoelemente beispielsweise auf einer Kugeloberfläche angeordnet, so kann der Hörer gedreht werden, und das durch Summation entstandene
Empfangssignal PE bleibt konstant.

Ist eine Photodiode durch starkes Dauerstörlicht
übersteuert, so liefert sie zwar selbst keinen Beitrag mehr zum Summensignal, beeinträchtigt aber die
Arbeitsweise der anderen Photodioden nicht.

Anstelle einer Photodiode, beispielsweise PD1 können
selbstverständlich Serien- oder Parallelschaltungen
oder Parallel-Serien-Schaltungen von mehreren Photodioden angeschlossen werden.

43 Patentansprüche
24 Figuren

0027833

-31-     VPA 78 P 6626 EUR

<u>Patentansprüche</u>

1. Fernsprech-Teilnehmerstation mit einem an das Fernsprechnetz angeschlossenen Grundapparat und mit einem schnurlosen Handapparat, zwischen denen Sprachsignale mittels Infrarotstrahlen übertragen werden, sowie mit einer Wähleinrichtung, d a d u r c h   g e - k e n n z e i c h n e t , daß eine erste Übertragungsstrecke mit einem FS/PULS-Umsetzer (20) und mit einem ersten IR-Pulssender (4) im Grundapparat (1), mit einem ersten optischen Übertragungskanal (3) sowie mit einem ersten IR-Pulsempfänger (5) und mit einem PULS/NF-Umsetzer (19) im Handapparat (2) vorgesehen ist, daß eine zweite Übertragungsstrecke mit einem NF/PULS-Umsetzer (25) und mit einem zweiten IR-Pulssender (7) im Handapparat (2), mit einem zweiten optischen Übertragungskanal (6) sowie mit einem zweiten IR-Pulsempfänger (8) und mit einem PULS/FS-Umsetzer (19) im Grundapparat (1) vorgesehen ist, daß im Grundapparat (1) und/oder im Handapparat (2) eine Nachziehschaltung (22) zur Phasensynchronisation vorgesehen ist.
und daß im Hand- und/oder im Grundapparat eine Rufvorrichtung (30) vorgesehen ist.

2. Fernsprech-Teilnehmerstation nach Anspruch 1,  d a - d u r c h   g e k e n n z e i c h n e t , daß als FS/PULS-Umsetzer (20) ein NF/PPM-Umsetzer, als PULS/NF-Umsetzer (26) ein PPM/NF-Umsetzer, als NF/ PULS-Umsetzer (25) ein zweiter NF/PPM-Umsetzer und als PULS/FS-Umsetzer (19) ein zweiter PPM/NF-Umsetzer vorgesehen ist.

-32-   VPA 78 P 6626 EUR

3. Fernsprech-Teilnehmerstation nach Anspruch 1, d a d u r c h   g e k e n n z e i c h n e t , daß als FS/PULS-Umsetzer (20) ein NF/PCM-RZ-Umsetzer (20'), als PULS/NF-Umsetzer (26) ein PCM-RZ/NF-Umsetzer (26'), als NF/PULS-Umsetzer (25) ein NF/PCM-RZ-Umsetzer (25') und als PULS/FS-Umsetzer (19) ein PCM-RZ/NF-Umsetzer (19') vorgesehen ist.

4. Fernsprech-Teilnehmerstation nach Anspruch 1, d a d u r c h   g e k e n n z e i c h n e t ,   daß als FS/PULS-Umsetzer (20) ein PCM-NRZ/PCM-RZ-Umsetzer, als PULS/NF-Umsetzer (26) ein PCM-RZ/NF-Umsetzer, als NF/PULS-Umsetzer (25) ein NF/PCM-RZ-Umsetzer und als PULS/FS-Umsetzer (19) ein PCM-RZ/PCM-NRZ-Umsetzer vorgesehen ist.

5. Fernsprech-Teilnehmerstation nach Anspruch 1, d a d u r c h   g e k e n n z e i c h n e t ,   daß als FS/PULS-Umsetzer (20) ein PCM/PPM-Umsetzer, als PULS/NF-Umsetzer (26) ein PPM/NF-Umsetzer als NF/PULS-Umsetzer (25) ein NF/PPM-Umsetzer und als PULS/FS-Umsetzer (19) ein PPM/PCM-Umsetzer vorgesehen ist.

6. Fernsprech-Teilnehmerstation nach einem der vorhergehenden Ansprüche,   d a d u r c h   g e k e n n - z e i c h n e t ,   daß der IR-Pulssender (4,7) sehr kurze Impulse von ca. 0,1 µs bis ca. 1 µs Dauer abgibt.

7. Fernsprech-Teilnehmerstation nach einem der Ansprüche 1 bis 6,  d a d u r c h   g e k e n n - z e i c h n e t ,   daß eine Wählvorrichtung im Handapparat (2) und/oder im Grundapparat (1) vorgesehen ist.

8. Fernsprech-Teilnehmerstation nach einem der Ansprüche 1 bis 6, d a d u r c h   g e k e n n - z e i c h n e t , daß der erste IR-Pulssender (4) und der erste IR-Pulsempfänger (5) für eine erste IR-Wellenlänge und der zweite IR-Pulssender (7) und der zweite IR-Pulsempfänger (8) für eine zweite IR-Wellenlänge ausgelegt sind.

9. Fernsprech-Teilnehmerstation nach einem der Ansprüche 1 bis 6, d a d u r c h   g e k e n n - z e i c h n e t , daß der erste optische Übertragungskanal (3) und der zweite optische Übertragungskanal (6) in unterschiedlichen Zeitintervallen betrieben werden.

10. Fernsprech-Teilnehmerstation nach Anspruch 2, d a d u r c h   g e k e n n z e i c h n e t , daß im Grundapparat (1) und im Handapparat (2) jeweils ein Zweiwegumsetzer mit einem PPM/NF-Umsetzer (19, 26) und mit einem NF/PPM-Umsetzer (20, 25) sowie mit jeweils einem gemeinsamen Sägezahngenerator (21, 27) vorgesehen ist.

11. Fernsprech-Teilnehmerstation nach einem der Ansprüche 3 bis 5, d a d u r c h   g e k e n n - z e i c h n e t , daß im Grundapparat (1) ein Zweiwegumsetzer mit einem FS/PULS-Umsetzer (20) und mit einem PULS/FS-Umsetzer (19) sowie mit einem ersten gemeinsamen Taktgenerator (21') und daß im Handapparat (2) ein Zweiwegumsetzer mit einem PULS/NF-Umsetzer (26) und mit einem NF/PULS-Umsetzer (26) sowie mit einem zweiten gemeinsamen Taktgenerator (27') vorgesehen ist.

0027833

12. Fernsprech-Teilnehmerstation nach einem der Ansprüche 1 bis 11, d a d u r c h g e k e n n - z e i c h n e t , daß beispielsweise an der Zimmerdecke eine Relaisstation (17, 17') vorgesehen ist.

13. Fernsprech-Teilnehmerstation nach Anspruch 12, d a d u r c h g e k e n n z e i c h n e t ,daß der erste IR-Pulssender (4) und der zweite IR-Pulsempfänger (8) in der Relaisstation (17) vorgesehen sind und daß eine Drahtverbindung (18) für die Übertragung der PPM oder PCM zwischen der Relaisstation (17) und dem Grundapparat (1) vorgesehen ist.

14. Fernsprech-Teilnehmerstation nach Anspruch 12, d a d u r c h g e k e n n z e i c h n e t , daß der Zweiwegumsetzer (19 bis 21) des Grundapparates in der Relaisstation (17) vorgesehen ist und daß eine Drahtverbindung (18) für die Übertragung der NF zwischen der Relaisstation (17) und dem Grundapparat (1) vorgesehen ist.

15. Fernsprech-Teilnehmerstation nach Anspruch 12, d a d u r c h g e k e n n z e i c h n e t , daß die Relaisstation (17') den ersten und den zweiten optischen Übertragungsweg in zwei Abschnitte (3, 3'; 6, 6') unterteilt und daß in jedem Abschnitt eines optischen Übertragungsweges die Übertragung mit einer anderen optischen Wellenlänge oder in einem anderen Zeitintervall erfolgt.

16. Fernsprech-Teilnehmerstation nach einem der vorhergehenden Ansprüche, d a d u r c h g e k e n n - z e i c h n e t , daß in den IR-Pulssendern (4, 7) und/oder den IR-Pulsempfänger (5, 8) mehrere Emissions- bzw. Photodioden vorgesehen sind.

17. Fernsprech-Teilnehmerstation nach Anspruch 12, d a d u r c h   g e k e n n z e i c h n e t , daß die Flächen-Normalen der Emissionsdioden und Photodioden in verschiedene Richtungen weisen.

18. Fernsprech-Teilnehmerstation nach Anspruch 12, d a d u r c h   g e k e n n z e i c h n e t , daß ein Diversity-Empfänger vorgesehen ist, der Photodioden, auf die ein zu großer Störpegel auffällt, abschaltet oder abregelt.

19. Fernsprech-Teilnehmerstation nach einem der vorhergehenden Ansprüche, d a d u r c h   g e k e n n z e i c h n e t ,  daß im Grundapparat (1) ein mit diesem über eine Schnur verbundener zweiter Handapparat (15) vorgesehen ist.

20. Fernsprech-Teilnehmerstation nach einem der Ansprüche 1 bis 11, d a d u r c h   g e k e n n z e i c h n e t ,  daß am Grundapparat (1) eine Aufnahmeeinrichtung (16) für den schnurlosen Handapparat (2) vorgesehen ist, über die ein Akkumulator der zweiten Stromversorgung (31) aufgeladen wird.

21. Fernsprech-Teilnehmerstation nach Anspruch 7, d a d u r c h   g e k e n n z e i c h n e t , daß im Grundapparat (1) eine Wählzeichenverarbeitung vorgesehen ist mit einem Wählzeichendemodulator (38), dessen Eingang mit dem Ausgang des zweiten IR-Pulsempfängers (8) verbunden ist, mit einem Nulldetektor (39), dessen Eingang mit dem Ausgang des PULS/FS-Umsetzers (19) oder mit dem entsprechenden Ausgang des Zweiwegumsetzers (19 bis 21) verbunden ist, mit einem ersten NAND-Gatter (41), dessen erster Eingang mit dem Ausgang des Wählzeichendemodulators (38) verbunden ist, mit einem zweiten NAND-Gatter (40), dessen
erster Eingang unmittelbar und dessen zweiter Eingang
über eine erste monostabile Kippstufe (44) mit dem Ausgang des ersten NAND-Gatters (41), dessen Eingang mit
dem Ausgang des Nulldetektors (39) und dessen Ausgang
mit dem zweiten Eingang des ersten NAND-Gatters (41)
verbunden sind, mit einem ersten Inverter (43), dessen
Eingang mit dem Ausgang des ersten NAND-Gatters (41)
verbunden ist und als Ausgang der Wählzeichenverarbeitung dient, mit einem dritten NAND-Gatter (42), dessen erster Eingang unmittelbar und dessen zweiter
Eingang über eine zweite monostabile Kippstufe (45)
mit dem Ausgang des ersten Inverters (43) verbunden
sind, und mit einem zweiten Inverter (46), dessen
Eingang mit dem Ausgang des dritten NAND-Gatters (42)
und dessen Ausgang mit einem Steuereingang (47) eines
den Eingang des ersten IR-Pulssenders (4) abschaltenden Schalters verbunden sind (Fig. 7).

22. Fernsprech-Teilnehmerstation nach Anspruch 21,
d a d u r c h   g e k e n n z e i c h n e t , daß
als Wählzeichendemodulator (38) eine Reihenschaltung,
bestehend aus einer dritten monostabilen Kippstufe
(48), einem ersten Tiefpaß (49, 50) und einem ersten
Komparator (52) vorgesehen ist.

23. Fernsprech-Teilnehmerstation nach Anspruch 21,
d a d u r c h   g e k e n n z e i c h n e t , daß
als Nulldetektor (39) eine Reihenschaltung, bestehend
aus einem zweiten Tiefpaß (53, 54),einem Verstärker
(55), einem Spitzenwertgleichrichter (56 bis 58) und
einem zweiten Komparator (60) vorgesehen ist.

24. Fernsprech-Teilnehmerstation nach einem der Ansprüche 1 bis 16, d a d u r c h   g e k e n n - z e i c h n e t , daß im Handapparat (2) eine Wähl- und/oder Sonderzeichen abgebende für Tastenwahl geeignete Wähleinrichtung (TA) vorgesehen ist, daß ein von der Wählvorrichtung gesteuerter Frequenzgenerator (FG) vorgesehen ist, der ein jedem Wähl- oder Sonderzeichen zugeordnetes, aus mindestens zwei überlagerten Tonfrequenzen bestehendes Mehrfrequenzsignal (MFS) abgibt, das von dem zweiten NF/PPM-Umsetzer in ein pulsphasenmoduliertes Signal (PPS) umgesetzt wird, und daß dieses pulsphasenmodulierte Signal (PPS) im Grundapparat von dem ersten PPM/NF-Umsetzer (19) wieder in ein Mehrfrequenzsignal (MFE) umgesetzt wird (Fig. 16 und 17).

25. Fernsprech-Teilnehmerstation nach Anspruch 24, d a d u r c h   g e k e n n z e i c h n e t , daß im Grundapparat (1) ein MFV/IWV-Umsetzer (WU) vorgesehen ist, der MFV-Wählzeichen in Wählzeichen nach dem Impulswahlverfahren (IWV) umsetzt, dessen Eingang an den Ausgang des zweiten PPM/NF-Umsetzers (19) geschaltet ist und über dessen Ausgang die IWV-Wählzeichen auf die Teilnehmerleitung (23) geschaltet sind.

26. Fernsprech-Teilnehmerstation nach Anspruch 24 oder 25, d a d u r c h   g e k e n n z e i c h n e t , daß im Grundapparat (1) eine Sonderzeichenauswerteschaltung (SA) vorgesehen ist, die beim Empfang von Sonderzeichen an ihren Ausgängen (AS1, AS2, ...) den Sonderzeichen zugeordnete Signale abgibt (Fig. 17).

27. Fernsprech-Teilnehmerstation nach einem der Ansprüche 1 bis 16 und 24, d a d u r c h   g e -

k e n n z e i c h n e t , daß im Handapparat ( 2 ) eine Rufvorrichtung (RU) mit einem steuerbaren Impulsgenerator (IG) vorgesehen ist, die für jedes Sonderzeichen eine zugeordnete Impulsfrequenz (fI) über den zweiten IR-Pulssender (7) aussendet, und daß im Grundapparat ( 1 ) eine Frequenzerkennungsschaltung (EF) vorgesehen ist, die diese Impulsfrequenz (fI) erkennt und an ihren Ausgängen (AE1, AE2, ...) ein dem Sonderzeichen entsprechendes Signal abgibt (Fig. 18 und 19).

28. Fernsprech-Teilnehmerstation nach Anspruch 27, d a d u r c h   g e k e n n z e i c h n e t , daß eine Schaltvorrichtung vorgesehen ist, die den Hörer (29) des Handapparates ( 2 ) während der Aussendung von Sonderzeichen abschaltet.

29. Fernsprech-Teilnehmerstation nach Anspruch 24 bis 28, d a d u r c h   g e k e n n z e i c h - n e t , daß im Grundapparat eine Überwachungsschaltung (UE) vorgesehen ist, die einen Frequenzvergleich zwischen den empfangenen Impulsen (PPE) und den vom Sägezahngenerator (21) abgegebenen Impulsen durchführt und bei fehlendem Synchronismus ein Fehlersignal (UF) abgibt (Fig. 19).

30. Fernsprech-Teilnehmerstation nach Anspruch 29, d a d u r c h   g e k e n n z e i c h n e t , daß die Überwachungsschaltung (UE) so dimensioniert ist, daß sie beim Empfang von Sonderzeichen auf die geänderte Frequenz der empfangenen Impulse (PPE) anspricht und das Fehlersignal (UF) abgibt.

31. Fernsprech-Teilnehmerstation nach Anspruch 29 oder 30, d a d u r c h   g e k e n n z e i c h n e t , daß das von der Überwachungsschaltung abgegebene Fehlersignal (UF) eine Schaltvorrichtung betätigt, die eine Weitergabe von Signalen vom Grundapparat ( 1 ) an die Teilnehmerleitung (23) verhindert.

32. Fernsprech-Teilnehmerstation nach Anspruch 29 oder 30, d a d u r c h   g e k e n n z e i c h - n e t , daß ein Zeitglied (ZG) an den Ausgang der Überwachungsschaltung (UE) angeschaltet ist, das bei einem längere Zeit an einem Eingang anliegenden Fehlersignal (UF) an seinem Ausgang einen Impuls abgibt, der die Fernsprechverbindung abschaltet.

33. Fernsprech-Teilnehmerstation nach einem der vorhergehenden Ansprüche, d a d u r c h   g e k e n n - z e i c h n e t , daß ein zweites Zeitglied (ZE) an den Ausgang der Überwachungsschaltung (UF) angeschaltet ist, das beim Auftreten des Fehlersignals (UF) nach kurzer Zeitverzögerung einen Impuls an seinem Ausgang abgibt, der die Frequenzerkennungsschaltung (EF) aktiviert.

34. Fernsprech-Teilnehmerstation nach einem der vorhergehenden Ansprüche, d a d u r c h   g e - k e n n z e i c h n e t , daß ein Zeitglied (MZ) im Handapparat ( 2 ) vorgesehen ist, das bei Betätigung der Ende-Taste (TU) die Stromversorgung (31) über einen Schalter (SB) verzögert abschaltet(Fig.18)

35. Fernsprech-Teilnehmerstation nach Anspruch 29, d a d u r c h   g e k e n n z e i c h -

n e t ,    daß als Überwachungsschaltung (UE) eine
Reihenschaltung eines Gleichrichters (GL) mit einem
daran angeschlossenen Ladekondensator (CU) sowie
parallel liegenden Widerstand (RU) und eines Spannungskomparators (KU) vorgesehen ist.

36. Fernsprech-Teilnehmerstation nach einem der vorhergehenden Ansprüche, d a d u r c h    g e -
k e n n z e i c h n e t , daß als Frequenzerkennungsschaltung (EF) eine Schaltungsanordnung vorgesehen ist
mit einem triggerbaren Multivibrator (MT), mit an
seinem Ausgang angeschlossenen Bandpässen (BP1,
BP2, ...), deren verschiedene Durchlaßfrequenzen den
Sonderzeichen (SZ1, SZ2, ...) entsprechen, und mit
einem am Ausgang jedes Bandpasses (BP1, BP2, ...) angeschlossenen Spannungskomparator (KS1, KS2, ...)
mit nachgeschalteter monostabiler Kippstufe (MS1,
MS2, ...) (Fig. 20).

37. Fernsprech-Teilnehmerstation nach einem der Ansprüche 27 bis 35, d a d u r c h    g e k e n n -
z e i c h n e t , daß als Frequenzerkennungsschaltung (EF) digitale Filter mit anschließenden digitalen
Komparatoren mit daran angeschlossenen, digital nachgebildeten monostabilen Kippstufen vorgesehen sind.

38. Fernsprech-Teilnehmerstation nach einem der
vorhergehenden Ansprüche, d a d u r c h    g e -
k e n n z e i c h n e t , daß als IR-Diversity-
Pulsempfänger (IE) eine Reihenschaltung eines optoelektronischen Wandlers (OE) und eines geregelten
Empfangsverstärkers (EV) mit einem als Abtastschaltung arbeitenden Komparator (K01) mit geregelter
Abtastschwelle vorgesehen ist (Fig. 22).

39. Fernsprech-Teilnehmerstation nach Anspruch 38, d a d u r c h   g e k e n n z e i c h n e t , daß als Empfangsverstärker (EV) eine Schaltungsanordnung vorgesehen ist, mit einem regelbaren Verstärker (VR), mit einem ersten Komparator (KO1), dessen erster Eingang (EK11), mit einem zusätzlichen Komparator (KO2), dessen nicht invertierender Eingang (EK22) ebenfalls mit dem Ausgang des regelbaren Verstärkers (VR) verbunden ist und mit einem an den Ausgang des zusätzlichen Komparators (KO2) angeschalteten Gleichrichter (GL), dem ein Tiefpaß (TP) nachgeschaltet ist, dessen Ausgang an den invertierenden Eingang (EK21) des zusätzlichen Komparators (KO2) und über einen Spannungsteiler (RS) an einen zweiten Eingang (EK12) des ersten Komparators angeschlossen ist und an den Eingang eines Reglers (RE) geführt ist, der die Verstärkung des regelbaren Verstärkers (VR) bestimmt (Fig. 23).

40. Fernsprech-Teilnehmerstation nach Anspruch 38 oder 39, d a d u r c h   g e k e n n z e i c h - n e t ,   daß ein regelbarer Verstärker (VR) mit einem Steuereingang (SE) zum Abschalten des Eingangssignals vorgesehen ist.

41. Fernsprech-Teilnehmerstation nach Anspruch 39, d a d u r c h   g e k e n n z e i c h n e t , daß anstelle des Tiefpasses (TP) im Empfangsverstärker (EV) ein Kondensator verwendet wird.

42. Fernsprech-Teilnehmerstation nach einem der Ansprüche 38 bis 41, d a d u r c h   g e - k e n n z e i c h n e t ,   daß eine monostabile Kippstufe (MO) vorgesehen ist, die die Sendeimpulse

-42-    VPA 78 P 6626 EUR

(PS) in verlängerte Impulse (PPV) umsetzt und mit diesen im regelbaren Verstärker (VR) die Sendeimpulse des eigenen IR-Pulssenders (4, 7) ausblendet.

43. Fernsprech-Teilnehmerstation nach einem der Ansprüche 38 bis 41, d a d u r c h    g e k e n n - z e i c h n e t , daß als optoelektronischer Wandler (OE) eine Summationsschaltung vorgesehen ist, bei der Photodioden (PD1, PD2, ...) über Kondensatroen (CE1, CE2, ...) an die Eingänge von Summationsverstärkern (VS1, VS2, ...) angeschlossen sind, deren Ausgänge wiederum über Kondensatoren (CA1, CA2, ...) wechselspannungsgemäß zusammengeschaltet sind (Fig. 24).

**FIG 1**

**FIG 2**

**FIG 3**

# FIG 4

# FIG 5

## FIG 6

## FIG 7

## FIG 8

## FIG 9

## FIG 10

FIG 11

V

65

64
Sägezahn u
Pulsgener.

a

66

67

b

c

h1

72

i1

73

m1

68
-1
p1

s1

69

a1

70

71
+1

FIG 12

p1

125µs

s1

h1

a1

i1

m1

t

FIG 13

V

74

75

76

77

c

## FIG 14

## FIG 15

0027833

## FIG 16

## FIG 17

**FIG 18**

8/11

0027833

**FIG 20**

**FIG 21**

0027833

FIG 19

1

## FIG 22

## FIG 23

## FIG 24

**EUROPÄISCHER RECHERCHENBERICHT**

0027833
Nummer der Anmeldung

EP 79 10 4792

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| L | DE - A - 2 823 931 (SIEMENS A.G.) 06-12-1979<br><br> * Patentansprüche 1-17; Figuren * | 1-4, 8-23 |
| | DE - B - 2 832 374 (TELEFONBAU UND NORMALZEIT)<br><br> * Spalte 3, Zeile 1 - Spalte 4, Zeile 33; Figur 2 * | 1,7, 21,24-26 |
| | GB - A - 1 548 145 (STANDARD TELE-PHONES AND CABLES)<br><br> * Seite 1, Zeile 57 - Seite 2, Zeile 52; Figur * | 1,7, 20 |
| | DE - A - 2 609 283 (OSTERHOLZER)<br> * Seite 2, Zeilen 1-12 * | 1,7 |
| D | DE - A - 2 604 652 (OSTERHOLZER)<br> * Seite 1, Zeilen 1-12 * | 1 |
| D | DE - A - 2 431 937 (SEMMHEISER ELECTRONIC)<br><br> * Seite 6, Zeile 10 - Seite 7, Zeile 7 * | 1,2 |

**KLASSIFIKATION DER ANMELDUNG (Int.Cl. 3)**

H 04 M 1/72
H 04 B 9/00

**RECHERCHIERTE SACHGEBIETE (Int. Cl. 3)**

H 04 M 1/72
H 04 B 9/00
H 04 M 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 21-07-1980 | KEPPENS |

EPA form 1503.1  06.78